# EUROPÄISCHE PATENTSCHRIFT

(11) **EP 3 224 045 B1**
(45) Veröffentlichungstag und Bekanntmachung des Hinweises auf die Patenterteilung: **23.01.2019**
(21) Anmeldenummer: 15800794.8
(22) Anmeldetag: 24.11.2015
(51) Int. Cl.: B32B 17/06

(54) **LICHTDURCHLÄSSIGES HITZESCHUTZELEMENT**
TRANSPARENT HEAT PROTECTION ELEMENT
ÉLÉMENT TRANSPARENT DE PROTECTION CONTRE LA CHALEUR

(30) Priorität: 24.11.2014 EP 14194499
(43) Veröffentlichungstag der Anmeldung: 04.10.2017
(73) Patentinhaber: Saint-Gobain Glass France, 92400 Courbevoie (FR)
(72) Erfinder: GELDERIE, Udo, 52146 Würselen (DE); SCHWANKHAUS, Norbert, 52499 Baesweiler (DE); TE STRAKE, David, 52070 Aachen (DE)
(74) Vertreter: Frei Patent Attorneys
(86) Internationale Anmeldenummer: PCT/EP2015/077505
(87) Internationale Veröffentlichungsnummer: WO 2016/083375

(56) Entgegenhaltungen:
- WO-A1-94/04355
- WO-A1-2006/092426
- US-A1- 2013 157 036

## Beschreibung

Die Erfindung bezieht sich auf das Gebiet des Brandschutzes insbesondere auf eine Brandschutzverglasung mit einer Brandschutzzwischenschicht aus wasserhaltigem Alkalisilikat. Sie bezieht sich auf eine Brandschutzverglasung gemäss dem Oberbegriff des unabhängigen Patentanspruches 1.

Ein lichtdurchlässiges Hitzeschutzelement mit einer Schutzschicht aus einem ausgehärteten Polysilikat zwischen jeweils zwei Glasplatten ist beispielsweise aus WO 94/04355 bekannt. Das ausgehärtete Polysilikat wird aus einem Alkalisilikat und mindestens einem Härter gebildet, wobei im Polysilikat ein Molverhältnis von Siliziumdioxid zu Alkali-Metalloxid (M₂O) eingestellt wird, welches grösser als 4:1 ist. Das Polysilikat ist als Alkalisilikat-Wasserglas ausgebildet. Die Ausgangsmasse für das Polysilikat/ Alkalisilikat-Wasserglas ist eine fliessfähige Masse mit einem Wassergehalt bis zu 60 % und lässt sich in den Zwischenraum zwischen zwei Glassplatten eingiessen. Beim Aushärten der Masse bleibt der hohe Wassergehalt erhalten, und das Polysilikat/Alkalisilikat-Wasserglas weist trotzdem eine gute Eigenfestigkeit und Haftung an den Glassplatten auf. Als Alkalisilikat wird vorzugsweise ein Lithium-, Natrium- oder Kaliumsilikat oder eine Mischung davon und als Alkali-Metalloxid ein Natrium-, Kalium- oder Lithiumoxid oder eine Mischung davon eingesetzt. Der Gehalt an Alkali-Metalloxid (M₂0) in der Form von Natrium-, Kalium- oder Lithiumoxid oder einer Mischung davon beträgt maximal 16%.

Bei Schutzschichten aus wasserhaltigem Alkalisilikat und Kieselsol als Härter gemäss WO 94/04355 kann insbesondere mit der Zeit oder unter ungünstigen Umweltfaktoren, wie beispielsweise durch lange heisse Sommer mit länger andauernden Einwirkung von erhöhten Temperaturen, oder unsachgemässem Gebrauch eine Tendenz zur Eintrübung beobachtet werden, und ein Eintrübungsprozess initiiert werden kann.

In WO 2009/111897 wird ein lichtdurchlässiges Hitzeschutzelement mit mindestens einem Trägerelement und mindestens einer Schutzschicht offenbart. Die Schutzschicht umfasst ein Reaktionsprodukt, welches eine wässrige Alkalisilikatlösung und aluminium- oder borat-modifiziertes Siliziumdioxid umfasst, um die Alterungsbeständigkeit des Hitzeschutzelements zu erhöhen. Das Reaktionsprodukt weist ein Molverhältnis aus Siliziumdioxid und Alkalimetalloxid (M₂O; M=Bor, Lithium, Natrium oder Kalium) von 4 bis 7 auf. Der Gehalt an Alkali-Metalloxid in der Form von Natrium-, Kalium- oder Lithiumoxid oder einer Mischung davon beträgt maximal 16%.

Es ist deshalb Aufgabe der Erfindung, ein alternatives Hitzeschutzelement zu schaffen, welches eine reduzierte Tendenz zur Eintrübung und damit eine verbesserte Alterungsbeständigkeit aufweist.

Diese Aufgabe löst ein lichtdurchlässiges Hitzeschutzelement mit den Merkmalen des unabhängigen Patentanspruches 1.

Das lichtdurchlässige Hitzeschutzelement mit einem ersten und einem zweiten Trägerelement weist eine Zwischenschicht zwischen dem ersten und zweiten Trägerelement auf. Die Zwischenschicht weist ein ausgehärtetes Alkalisilikatgel auf, welches aus einer wässrigen Alkalisilikatlösung und einer Siliziumdioxidverbindung gebildet wird. Dabei weist das Alkalisilikatgel der Zwischenschicht ein Molverhältnis von Siliziumdioxid (SiO₂) zu Alkalimetalloxid (M₂O) grösser 4 auf.

Des Weiteren weist das Alkalisilikatgel 0.05 bis 0.14 Gewichtsprozent Lithiumsilikat auf.

Bei Langzeitmessungen der Trübung von Hitzeschutzelement mit zwei Trägerelementen und einer Zwischenschicht aus ausgehärtetem Alkalisilikatgel mit einem konstanten Molverhältnis von Siliziumdioxid zu Alkalimetalloxid (auch als Modul bezeichnet) hat sich gezeigt, dass eine Zudosierung von Lithiumsilikat zu einem im Wesentlichen lithiumfreien Alkalisilikat einen positiven Effekt auf die Langzeittransparenz der Zwischenschicht hat. Somit kann der Effekt der Trübungsreduzierung ausschliesslich dem zudosierten Lithiumsilikat zugeschrieben werden.

Um die Alterung von Hitzeschutzelementen mit verschiedenen Zudosierungen von Lithiumsilikat zum Alkalisilikatgel der Zwischenschicht zu untersuchen, wurden die Hitzeschutzelemente bei 60°C gealtert und deren Trübung über die Zeit gemessen.

Die Langzeitmessungen der Trübung der Hitzeschutzelemente zeigen überraschenderweise, dass im Bereich von 0.05 bis 0.14 Gewichtsprozent Lithiumsilikat eine verstärkte Reduktion der Trübung des Hitzeschutzelements als Alterserscheinung erreicht werden kann. Bei einem höheren Gehalt an Lithiumsilikat kann erneut eine Zunahme der Eintrübung im Laufe der Zeit festgestellt werden. Mit anderen Worten: Eine Über- oder Unterdosierung von Lithiumsilikat zum Alkalisilikatgel führt zu keinem oder einem weniger ausgeprägten positiven Effekt auf die Alterungsbeständigkeit des Hitzeschutzelements.

Im Gegensatz dazu würde der Fachmann erwarten, dass eine weitere Steigerung des Lithiumsilikatgehaltes eine weitere Verbesserung der Alterungsbeständigkeit erreicht werden kann und beispielsweise wie in WO 94/04355 offenbart einer Zwischenschichten mit einem Gehalt von bis zu 16% Lithiumoxid verwenden.

In weiteren Ausführungsbeispielen kann die Siliziumdioxidverbindung zur Bildung des Alkalisilikatgels ein Kieselsol, Fällungssiliziumdioxid, Kieselgel und/oder pyrogenem Siliziumdioxid aufweisen. Auf diese Weise wird es möglich dass die Bildung eines homogenen und klaren Alkalisilikatgels erleichtert werden kann, da die Siliziumdioxidverbindung in wässriger Lösung Kieselsäure freisetzen kann, die als Härter zur Bildung des Alkalisilikatgels fungieren kann.

Die wässrige Alkalisilikatlösung kann ein Lithiumsilikat oder eine Mischung aus Lithium-, Natrium- und/oder Kaliumsilikat aufweisen. Auf diese Weise kann das Molverhältnis von Siliziumdioxid zu Alkalimetalloxid (Modul) auf einen gewünschten Wert eingestellt werden.

Das Alkalisilikatgel der Zwischenschicht kann ein Modul von beispielsweise 4,5 bis 8, insbesondere 4,5 bis 7, insbesondere 4,8 bis 5,1 aufweisen.

Das Alkali-Metalloxid kann zur Einstellung des Molverhältnises von Siliziumdioxid (SiO₂) zu Alkali-Metalloxid (M₂O) ein Lithiumoxid oder eine Mischung aus Lithium-, Natrium- und/oder Kaliumoxid aufweisen.

Die Zwischenschicht kann einen Gehalt von 30% bis 55%, insbesondere von 37% bis 40% Siliziumdioxid aufweisen, wodurch das ausgehärtete Alkalisilikatgel als homogenes Alkalisilikat-Wasserglas gebildet werden kann.

Die Zwischenschicht kann in anderen Ausführungsbeispielen bis 60% Wasser aufweisen. Dadurch wird es möglich, dass aufgrund der hohen Wärmekapazität des Wassers viel Energie durch die Zwischenschicht absorbiert werden kann und so ein Aufheizen des Hitzeschutzelements verlangsamt werden kann. Des Weiteren kann das Hitzeschutzelement dadurch eine hohe Feuerwiderstandsdauer erreichen, da für den Verdampfungsprozess des Wassers eine grosse Wärmemenge absorbiert werden kann.

Die Zwischenschicht kann Mittel zur Senkung des Gefrierpunktes (Mittel zur Gefrierpunktserniedrigung) aufweisen, wobei das Mittel zur Gefrierpunktserniedrigung einen monofunktionellen und/oder polyfunktionellen Alkohol wie beispielsweise Glycerin, Glykol, Zucker, Di- und Polyethylenglykol und/oder Monoethylenglykol aufweisen kann.

In weiteren Ausführungsbeispielen kann das Hitzeschutzelement einen Randverbund entlang der Kante zwischen dem ersten und zweiten Trägerelement aufweisen. Dabei bilden der Randverbund und die Trägerelemente einen Zwischenraum, welcher mit der Zwischenschicht gefüllt ist. Dadurch wird es möglich, dass die Zwischenschicht in den Zwischenraum eingefüllt und in diesem gehalten werden kann. Das ausgehärtete Alkalisilikatgel kann auf diese Weise bis an den Rand des Hitzeschutzelements angeordnet werden und mit Hilfe des Randverbundes gegen die Umgebungsluft abgedichtet werden. Eine solche Abdichtung ist vorteilhaft, da das Alkalisilikatgel der Zwischenschicht mit der Umgebungsluft ungewollte Reaktionen eingehen könnte und so den Alterungsprozess des Hitzeschutzelements beschleunigt werden könnte.

Der Randverbund kann zweiteilig ausgebildet sein und einen Abstandhalter (und/oder Kleber) sowie eine Dichtmasse aufweisen. Der Abstandhalter kann bspw. innenseitig und die Dichtmasse aussenseitig angeordnet sein. Als Abstandhalter kommen Kunststoffe wie bspw. Butylpolymere - insbesondere Polyisobutylene - in Frage, auch hybride Aufbauten aus einem metallischen Gerüst und einem Kunststoff kommen in Frage. Als Dichtmasse ist bspw. Polysulfid geeignet; andere Kunststoffe wie z.B. Silikone und Polyurethane mit dichtenden Eigenschaften sind ebenfalls bekannt.

In weiteren Ausführungsbeispielen kann das Hitzeschutzelement zwischen dem ersten und zweiten Trägerelement eine Primerschicht aufweisen, welche an mindestens einer der Trägerelemente zur Zwischenschicht hin angeordnet ist. Die Primerschicht weist ein Material auf, dessen Adhäsion an die Zwischenschicht und/oder an mindestens eines der Trägerelemente sich unter Brandschutz-Testbedingungen im Vergleich zur Raumtemperatur-Bedingungen verringert.

Der Begriff "Primer" ist so zu verstehen, dass die Primerschicht eine Adhäsion zwischen dem Trägerelement und der Zwischenschicht vermittelt, welche auch über lange Zeiten bei Normaltemperaturen - von bspw. maximal 50°C - einer Ablösung des Trägerelements und der Zwischenschicht voneinander vorbeugt.

Die Primerschicht kann an demjenigen Trägerelement angeordnet sein vorhanden, welche auf der dem Feuer zugewandten Seite (sofern diese definiert ist) liegt. Es ist auch möglich, dass die Primerschicht jeweils beidseitig der Zwischenschicht angeordnet ist.

Der Ansatz, dass die Primerschicht so ausgebildet ist, dass die Adhäsion unter Bedingungen nachlässt, welche bei einem Brandschutztest herrschen, beruht auf der Erkenntnis, dass bei grosser Erhitzung, welche bei Testbedingungen und auch im Ernstfall herrschen, das dem Feuer zugewandte Trägerelement bersten kann und sich einzelne Stücke lösen können. Wenn das der Fall ist, soll gesichert sein, dass die Kohäsion innerhalb der Zwischenschicht grösser ist als die Adhäsion zum der Wärmequelle zugewandten Trägerelement, so dass keine Lücken in die Zwischenschicht gerissen werden, wenn sich Stücke aus dem Trägerelement lösen.

Die Primerschicht kann bspw. so ausgestaltet sein, dass sich ihre Adhäsion an die Zwischenschicht bei Temperaturen nahe dem Siedepunkt von Wasser, d.h. bei Temperaturen von über ca. 80°C oder über ca. 90°C signifikant verringert.

Bei den vorliegenden Zwischenschichten auf Alkalisilikatbasis kann beispielsweise ein Silan, insbesondere ein organofunktionelles Silan, insbesondere ein Alkylsilan, bspw. ein halogeniertes insbesondere ein fluoriertes und/oder chloriertes Alkylsilan als Primer verwendet werden. Alternativ kann die Primerschicht ein Material aus der Gruppe der Wachse, Fettsäuren, Fettsäurederivate, thermoplastischen Lacke, jeweils bevorzugt mit einem Erweichungspunkt bzw. Schmelzpunkt zwischen 70°C oder 80°C und 150°C aufweisen.

Mindestens eines der Trägerelemente kann als Glasscheibe, insbesondere als flache Glasscheibe ausgebildet sein. In anderen Ausführungsbeispielen kann mindestens eines der Trägerelemente als Keramikglas oder spezielle gebogenes Glas ausgebildet sein. Besonders günstig können thermisch oder eventuell chemisch vorgespannte Glasscheiben sein. Als Alternativen zu Glasscheiben auf Siliziumoxidbasis kommen auch transparente Träger auf Polymerbasis (bspw. aus Polycarbonaten oder PolyMethyl-Methacrylat (PMMA; Acrylglas), teilweise kristalline "Gläser" (Keramikgläser), Borosilikatgläser oder Verbundsysteme mit Glasscheiben und Kunststoffträgern in Frage.

Mindestens eines der Trägerelemente kann als transparentes Trägerelement ausgebildet sein.

Das Hitzeschutzelement kann mehrere jeweils zwischen zwei Trägerelementen angeordnete Zwischenschichten aufweisen. Auf diese Weise wird es möglich, dass die mehreren Zwischenschichten mehr Energie absorbieren können als eine einzelne Zwischenschicht. Dadurch können die Hitzeschutzeigenschaften des Hitzeschutzelements verbessert werden.

In weiteren Ausführungsbeispielen kann das Hitzeschutzelement als Brandschutzelement ausgebildet sein. Ein Brandschutzelement ist durch eine Feuerwiderstandsdauer gekennzeichnet. Der Feuerwiderstand bzw. Brandwiderstand kann als Fähigkeit eines Bauteils betrachtet werden, eine wirksame Barriere gegen die Ausbreitung von Flammen, Rauch und heissen Gassen zu bilden und/oder die Transmission von Hitzestrahlung zu verhindern. Eine Feuerwiderstandsdauer ist als Mindestdauer in Minuten definiert, während der das Brandschutzelement bei der Prüfung nach genormten Prüfungsverfahren mit definierten Randbedingungen (EN 1364 und EN 1363) und unter einer bestimmten Temperaturbeanspruchung bestimmte eventuell genormte Anforderungen erfüllt. Beispielsweise sind solche genormten Anforderungen in EN 13505 aufgeführt bzw. definiert und ermöglichen die Klassifizierung von Brandschutzelementen. Die Feuerwiderstandsdauer ist somit ein Mass für die Brauchbarkeit der Konstruktion im Brandfall. Mit anderen Worten: Während der Feuerwiderstandsdauer wird der Durchgang von Feuer durch das Brandschutzelement verhindert, also ein Raumabschluss unter Brandbedingungen (EN 1363 und EN 1364) sicherstellt. Zusätzlich zum Raumabschluss kann das Brandschutzelement noch weitere Funktionen, wie beispielsweise eine Hitzeisolierung erfüllen.

Klassifizierungszeiten werden für jede Klassifikation in Minuten angegeben, wobei die Klassifizierungszeiten: 10, 15, 20, 30, 45, 60, 90, 120, 180, 240 oder 360 zu verwenden sind. Die Feuerwiderstandsdauer ist damit mit mindestens 10 Minuten definiert. Im Allgemeinen erfüllt ein Brandschutzelement somit mindestens 10 Minuten die entsprechenden Kriterien bzw. Anforderungen (siehe Klassifizierung - EN 13501) für die Feuerwiderstandsdauer. Das Minimalkriterium ist dabei der Raumabschluss. Ein Brandschutzelement muss daher mindestens als E10 klassifiziert werden können.

Das Alkalisilikatgel kann ein Molverhältnis von Siliziumdioxid zu Alkalimetalloxid (Modul) grösser 4 ausweisen. Es ist auch möglich, dass das Modul des Alkalisilikatgels im Bereich zwischen 4.2 und 6.5 liegt.

Ebenfalls Gegenstand der Erfindung ist ein Verfahren zur Herstellung eines Hitzeschutzelements der beschriebenen Art.

Beim Verfahren zur Herstellung des Hitzeschutzelements wird ein Gemisch aus der wässrigen Alkalisilikatlösung und der Siliziumdioxidverbindung in einen Zwischenraum zwischen dem ersten und zweiten Trägerelement eingebracht. Das Gemisch härtet unter Energieeintrag im Zwischenraum zu einem Alkalisilikatgel aus und bildet so die Zwischenschicht.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im Folgenden wird der Erfindungsgegenstand anhand von bevorzugten Ausführungsbeispielen, welche in der beiliegende Zeichnung dargestellt ist, näher erläutert. Es zeigt jeweils schematisch:

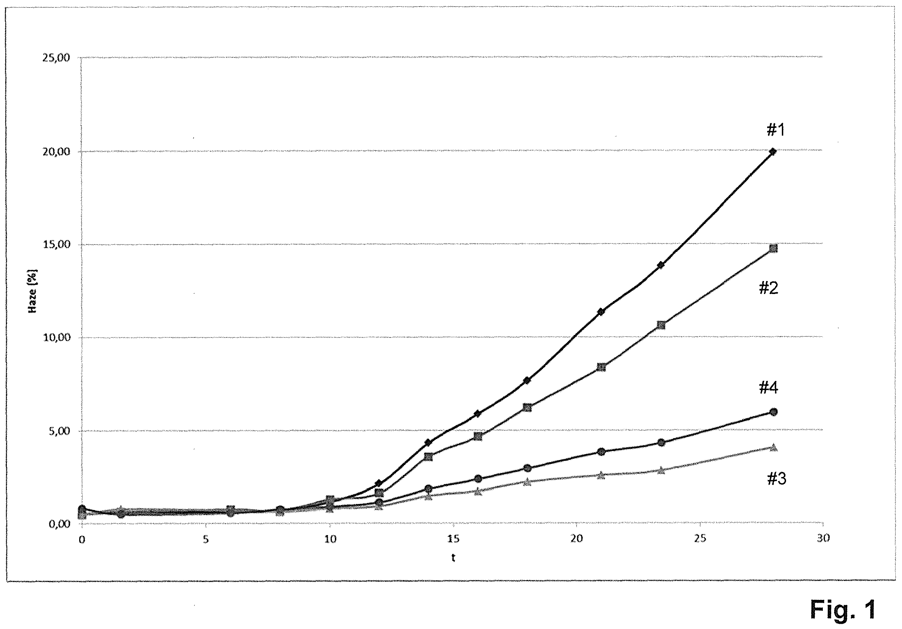

- Figur 1: Trübungsentwicklung in Hitzeschutzelementen über die Zeit für verschiedene Zusammensetzungen einer Zwischenschicht in einem Hitzeschutzelement bei 60°C,

Grundsätzlich sind in der Figur gleiche oder analoge Teile mit gleichen Bezugszeichen versehen.

Die Figur 1 zeigt die Trübungsentwicklung in Hitzeschutzelementen über die Zeit in Wochen für verschiedene Zusammensetzungen einer Zwischenschicht in einem Hitzeschutzelement bei einer Lagerung bei 60°C.

Bei Langzeitmessungen der Trübung von Hitzeschutzelement mit zwei Trägerelementen und einer Zwischenschicht aus ausgehärtetem Alkalisilikatgel mit einem konstanten Molverhältnis von Siliziumdioxid zu Alkalimetalloxid (auch als Modul bezeichnet) hat sich gezeigt, dass eine Zudosierung von Lithiumsilikat zu einem im Wesentlichen lithiumfreien Alkalisilikat einen positiven Effekt auf die Langzeittransparenz der Zwischenschicht hat. Somit kann der Effekt der Trübungsreduzierung ausschliesslich dem zudosierten Lithiumsilikat zugeschrieben werden.

Um die Alterung von Hitzeschutzelementen mit verschiedenen Zudosierungen von Lithiumsilikat zu einem im Wesentlichen lithiumfreien Alkalisilikatgel der Zwischenschicht zu untersuchen, wurden die Hitzeschutzelemente bei einer konstanten Temperatur von 60°C gealtert und deren Trübung über die Zeit gemessen, wie in Figur 1 gezeigt. Mit Hilfe einer solchen Langzeitmessung kann eine Trübung initiiert werden und sehr ungünstige Umwelteinflüsse simuliert werden.

Die Trübung des Hitzeschutzelements kann prozentual in Haze (H) angegeben werden. Durch den Haze-Wert wird der Streuanteil des durchfallenden Lichts ermittelt. Niedrige Haze-Werte korrespondieren mit einer hohen Transparenz und ein hoher Haze-Wert ist mit einer Trübung von transparenten Elementen verbunden.

Die folgenden Beispiele dienen der Veranschaulichung und Erläuterung der Erfindung und sind nicht als beschränkend auszulegen.

Die folgenden prozentualen Angaben zur Zusammensetzung des Alkalisilikatgels sind als Gewichtsprozent zu verstehen und beziehen sich auf das ausgehärtete Alkalisilikatgel.

### Beispiel 1 - Probe #1

Ein wasserhaltiges im Wesentlichen lithiumfreien Alkalisilikat, als Gemisch aus 56% einer wässrigen im Wesentlichen lithiumfreien Alkalisilikatlösung und 39.5% eines Fällungssiliziumdioxid wird mit 4.5% Monoethylenglykol (MEG) als Mittel zur Gefrierpunktserniedrigung versetzt. Das Alkalisilikat ist ein im Wesentlichen reines Kaliumsilikat, welches Spuren von Natrium enthalten kann, jedoch keine signifikanten Mengen an Lithium aufweist. Das Modul des wasserhaltigen im Wesentlichen lithiumfreien Alkalisilikats wird auf 5.09 eingestellt. Das wasserhaltige Alkalisilikat wird in einen Zwischenraum zwischen einem ersten und zweiten Trägerelement, welche je als vorgespannte Glasscheibe ausgebildet sind, eingebracht. Der Zwischenraum wird durch die beiden parallelen Glasscheiben und einen Randverbund entlang der Kanten der Glasscheiben gebildet. Das in den Zwischenraum eingebrachte wasserhaltige im Wesentlichen lithiumfreie Alkalisilikat mit einem Modul von 5.09 wird im Zwischenraum zu einem Alkalisilikatgel ausgehärtet. Das auf diese Weise hergestellte Hitzeschutzelement ist beispielsweise aus WO 94/04355 bekannt. Das Hitzeschutzelement wird einer Langzeitmessung der Trübung bei 60°C unterzogen. Die Resultate der Langzeitmessung sind in Figur 1 gezeigt. Die Messwerte der Probe #1, welche als Raute (◆) gekennzeichnet sind, zeigen einen Anstieg der Trübung. Nach 21 Wochen beträgt der Haze-Wert 11.3%.

### Beispiel 2 - Probe #2

In einer abgeänderten Variante wurde ein wasserhaltiges im Wesentlichen lithiumfreies Alkalisilikat gemäss Beispiel 1 verwendet, bei dem jedoch 0.1% (Gewichtsprozent, bezogen auf das ausgehärtete Alkalisilikatgel) einer Lithiumsilikatlösung mit 2.65% Lithiumoxid zudosiert wurden. Das Modul des wasserhaltigen lithiumhaltigen Alkalisilikats wurde, wie in Beispiel 1, auf 5.09 eingestellt, alle anderen Parameter bleiben im Vergleich zu Beispiel 1 unverändert. Das entsprechende Hitzschutzelement wurde ebenfalls einer Langzeitmessung der Trübung bei 60°C unterzogen. Die Resultate der Langzeitmessung sind in Figur 1 gezeigt. Die Messwerte der Probe #2, welche als Quadrate (■) gekennzeichnet sind, zeigen einen Anstieg der Trübung. Nach 21 Wochen beträgt der Haze-Wert im Vergleich zu Probe #1 nur 8.4%.

### Beispiel 3 - Probe #3

In einer variierenden Ausführungsform wurde ein wasserhaltiges im Wesentlichen lithiumfreien Alkalisilikat gemäss der Beispiele 1 (Probe #1) verwendet, bei dem ähnlich wie bei Beispiel 2 (Probe #2) jedoch 0.2% der Lithiumsilikatlösung mit 2.65% Lithiumoxid zudosiert wurden. Das Modul des wasserhaltigen Alkalisilikats wurde, wie in Beispiel 1 und 2 auf 5.09 eingestellt, alle anderen Parameter bleiben im Vergleich zu Beispiel 1 unverändert. Das entsprechende Hitzschutzelement wurde ebenfalls einer Langzeitmessung der Trübung bei 60°C unterzogen. Die Resultate der Langzeitmessung sind in Figur 1 gezeigt. Die Messwerte der Probe #3, welche als Dreiecke (A) gekennzeichnet sind, zeigen einen minimalen Anstieg der Trübung. Nach 21 Wochen beträgt der Haze-Wert nur 2.6%.

### Beispiel 4 - Probe #4

In einer variierenden Ausführungsform wurde ein wasserhaltiges Alkalisilikat gemäss Beispiele 3 (Probe #3) verwendet, bei dem jedoch 0.5% der Lithiumsilikatlösung mit 2.65% Lithiumoxid zudosiert wurden. Das Modul des wasserhaltigen Alkalisilikats wurde, wie in Beispiel 1, 2 und 3 auf 5.09 eingestellt, alle anderen Parameter bleiben im Vergleich zu Beispiel 1 unverändert. Das entsprechende Hitzschutzelement wurde ebenfalls einer Langzeitmessung der Trübung bei 60°C unterzogen. Die Resultate der Langzeitmessung sind in Figur 1 gezeigt. Die Messwerte der Probe #4, welche als Kreise (●) gekennzeichnet sind, zeigen einen minimalen Anstieg der Trübung. Nach 21 Wochen beträgt der Haze-Wert nur 3.8%.

Überblick: Das Modul sowie der Wassergehalt der Proben #2-#4 werden wie für Probe #1 auf 5.09 bzw. 42% eingestellt. Bei Probe #2 werden 0.1% (Gewichtsprozent) einer Lithiumsilikatlösung zu einem im Wesentlichen lithiumfreien Alkalisilikat zudosiert. Im Weiteren werden für Probe #3 0.2% und für Probe #4 0.5% der Lithiumsilikatlösung zu einem im Wesentlichen lithiumfreien Alkalisilikat zudosiert.

Die oben beschriebenen Zusammensetzungen für das Alkalisilikatgel werden als Zwischenschicht für entsprechende Hitzeschutzelemente (#1-#4) verwendet bei denen das Alkalisilikatgel zwischen einem ersten und zweiten Trägerelement aus Glas angeordnet ist. Die Proben #1-#4 werden je einer Langzeitmessung der Trübungstendenz unterzogen. Der zu den Probenummern (#1 bis #4) und Zusammensetzungen korrespondierende zeitliche Verlauf der Trübung bei 60°C ist in Figur 1 gezeigt. Die entsprechenden Messpunkte sind für die Probe #1 rautenförmig, Probe #2 als Quadrate, Probe #3 als Kreise und Probe #4 als Kreise dargestellt.

Die Prozentangaben für die Zusammensetzung des Alkalisilikatgels der Zwischenschicht beziehen sich auf die Gewichtsprozent in Bezug auf die Gesamtmasse der Zwischenschicht.

Es ist klar aus Figur 1 ersichtlich, dass eine Zudosierung von Lithiumsilikat zu einem im Wesentlichen lithiumfreien Alkalisilikat in geringen Mengen (siehe beispielsweise Probe #2) eine Reduktion der Trübung bewirkt. Eine deutlich stärkere Reduktion der Trübung kann durch die weitere erfindungsgemässe Zudosierung von Lithiumsilikat bewirkt werden (siehe Probe #3 und #4 in Figur 1). Wie aus Figur 1 ersichtlich ist, beträgt der Haze-Wert nach 21 Wochen für Probe #1 11.3%, für Probe #2 mit einer geringen Zudosierung Lithiumsilikat bereits nur noch 8.4%, für Probe #3 nur 2.6 % und für Probe #4 mit einer höherer Dosierung 3.8%. Es wird daher deutlich, dass eine Überdosierung von Lithiumsilikat überraschenderweise zu einer erneuten Erhöhung des Harz-Wertes führen kann.

Die Langzeitmessungen der Trübung der Hitzeschutzelemente zeigen wie in Figur 1 gezeigt, dass im Bereich von 0.05 bis 0.14 Gewichtsprozent Lithiumsilikat (Proben #3 und #4) eine verstärkte Reduktion der Trübung des Hitzeschutzelements als Alterserscheinung erreicht werden kann. Bei einem höheren Gehalt an Lithiumsilikat kann erneut eine Zunahme der Eintrübung im Laufe der Zeit festgestellt werden. Mit anderen Worten: Eine Über- oder Unterdosierung von Lithiumsilikat zum Alkalisilikatgel führt zu keinem oder einem weniger ausgeprägten positiven Effekt auf die Alterungsbeständigkeit des Hitzeschutzelements.

Für das erfindungsmässe Hitzeschutzelement kann das Alkalisilikatgel der Zwischenschicht 54% bis 59% einer wässrigen Alkalisilikatlösung und 35% bis 42% einer Siliziumdioxidverbindung sowie 0.05% bis 0.14% Lithiumsilikat aufweisen.

## Patentansprüche

1. Lichtdurchlässiges Hitzeschutzelement mit einem ersten und einem zweiten Trägerelement aufweisend eine Zwischenschicht zwischen dem ersten und zweiten Trägerelement, wobei die Zwischenschicht ein ausgehärtetes Alkalisilikatgel aufweist, welches aus einer wässrigen Alkalisilikatlösung und einer Siliziumdioxidverbindung gebildet wird, wobei das Alkalisilikatgel ein Molverhältnis von Siliziumdioxid (SiO₂) zu Alkali-Metalloxid (M₂O) grösser 4 aufweist, **dadurch gekennzeichnet, dass**
das Alkalsilikatgel 0.05 bis 0.14 Gewichtsprozent Lithiumsilikat aufweist.

2. Hitzeschutzelement gemäss Anspruch 1, wobei die Siliziumdioxidverbindung ein Kieselsol, Fällungssiliziumdioxid, Kieselgel und/oder pyrogenes Siliziumdioxid aufweist.

3. Hitzeschutzelement gemäss einem der Ansprüche 1-2, wobei die Alkalisilikatlösung ein Lithiumsilikat oder eine Mischung aus Lithium-, Natrium- und/oder Kaliumsilikat davon aufweist.

4. Hitzeschutzelement gemäss einem der Ansprüche 1-3, wobei das Alkali-Metalloxid ein Lithiumoxid oder eine Mischung aus Lithium-, Natrium- und/oder Kaliumoxid aufweist.

5. Hitzeschutzelement gemäss einem der Ansprüche 1-4, wobei die Zwischenschicht ein Mittel zur Senkung des Gefrierpunktes des Wasseranteiles aufweist.

6. Hitzeschutzelement gemäss einem der Ansprüche 1-5, wobei das Hitzeschutzelement zwischen dem ersten und zweiten Trägerelement einen Randverbund entlang der Kanten aufweist, wobei der Randverbund und die Trägerelemente einen Zwischenraum bilden, welcher mit der Zwischenschicht gefüllt ist.

7. Hitzeschutzelement gemäss Anspruch 6, wobei der Randverbund einen Abstandhalter und eine Dichtmasse aufweist.

8. Hitzeschutzelement gemäss einem der Ansprüche 1-7, wobei zwischen dem ersten und zweiten Trägerelement eine Primerschicht aus einem Material angeordnet ist, dessen Adhäsion an die Zwischenschicht und/oder an mindestens eines der Trägerelemente sich unter Brandschutz-Testbedingungen im Vergleich zur Raumtemperatur-Bedingungen verringert.

9. Hitzeschutzelement gemäss einem der Ansprüche 1-8, wobei mindestens eines der Trägerelemente als vorgespannte Glasscheibe ausbildet ist.

10. Hitzeschutzelement gemäss einem der Ansprüche 1-9, wobei das Hitzeschutzelement mehrere jeweils zwischen zwei Trägerelementen angeordnete Zwischenschichten aufweist.

11. Hitzeschutzelement gemäss einem der Ansprüche 1-10, wobei das Hitzeschutzelement ein Brandschutzelement ist.

12. Verfahren zur Herstellung eines lichtdurchlässigen Hitzeschutzelementes gemäss einem der Ansprüche 1-11, wobei unter Verwendung eines wasserhaltigen Alkalisilikates, als ein Gemisch aus der wässrigen Alkalisilikatlösung und der Siliziumdioxidverbindung in einen Zwischenraum zwischen dem ersten und zweiten Trägerelement eingebracht wird und im Zwischenraum als Zwischenschicht zum Alkalisilikatgel aushärtet, wobei das Molverhältnis von Siliziumdioxid zu Alkali-Metalloxid auf grösser 4 eingestellt wird und das Alkalsilikatgel 0.05 bis 0.14 Gewichtsprozent Lithiumsilikat aufweist.

## Claims

1. A transparent heat-protection element with a first and a second carrier element, comprising an interlayer between the first and the second carrier element, wherein the interlayer comprises a cured alkali silicate gel which is formed from an aqueous alkali silicate solution and from a silicon dioxide compound, wherein the alkali silicate gel has a molar ratio of silicon dioxide (SiO₂) to alkali metal oxide (M₂O) of larger than 4,
**characterised in that**
the alkali silicate gel comprises 0.05 to 0.14 percent by weight of lithium silicate.

2. Heat-protection element according to claim 1, wherein the silicon dioxide compound comprises a silica sol, precipitation silicon dioxide, silicic gel and/or pyrogenic silicon dioxide.

3. Heat-protection element according to one of the claims 1 - 2, wherein the alkali silicate solution comprises a lithium silicate or a mixture of lithium silicate, sodium silicate and/or potassium silicate.

4. Heat-protection element according to one of the claims 1-3, wherein the alkali metal oxide comprises a lithium oxide or a mixture of lithium oxide, sodium oxide and/or potassium oxide.

5. Heat-protection element according to one of the claims 1 - 4, wherein the interlayer comprises a means for reducing the freezing point of the water component.

6. Heat-protection element according to one of the claims 1-5, wherein the heat-protection element comprises an edge composite along the edges, between the first and the second carrier element, wherein the edge composite and the carrier elements form an intermediate space which is filled with the interlayer.

7. Heat-protection element according to claim 6, wherein the edge composite comprises a spacer and a sealing mass.

8. Heat-protection element according to one of the claims 1 - 7, wherein a primer layer of a material whose adhesion onto the interlayer and/or onto at least one of the carrier elements reduces under fire-protection test conditions compared to room temperature conditions, is arranged between the first and the second carrier element.

9. Heat-protection element according to one of the claims 1 - 8, wherein at least one of the carrier elements is designed as a prestressed glass pane.

10. Heat-protection element according to one of the claims 1-9, wherein the heat-protection element comprises several interlayers which are arranged between two carrier elements in each case.

11. Heat-protection element according to one of the claims 1-10, wherein the heat-protection element is a fire-protection element.

12. A method for manufacturing a transparent heat-protection element according to one of the claims 1 - 11, wherein, while using a hydrous alkali silicate, said hydrous alkali silicate being a mixture of the aqueous alkali silicate solution and of the silicon dioxide compound, is brought into an intermediate space between the first and the second carrier element, and is cured in the intermediate space into alkali silicate gel as an interlayer, wherein the molar ratio of silicon dioxide to alkali metal oxide is set to larger than 4 and the alkali silicate gel comprises 0.05 to 0.14 % by weight of lithium silicate.

## Revendications

1. Elément transparent de protection contre la chaleur, présentant
un premier et un deuxième élément de support ainsi qu'une couche intermédiaire entre le premier et le deuxième élément de support,
la couche intermédiaire présentant un gel durci de silicate d'alcali formé à partir d'une solution aqueuse de silicate d'alcali et d'un composé de dioxyde de silicium,
le gel de silicate d'alcali présentant un rapport molaire entre le dioxyde de silicium (SiO₂) et l'oxyde de métal alcalin (M₂O) supérieur à 4,
**caractérisé en ce que**
le gel de silicate d'alcali présente de 0,05 à 0,14 pourcent en poids de silicate de lithium.

2. Elément transparent de protection contre la chaleur selon la revendication 1, dans lequel le composé de dioxyde de silicium présente un sol de silice, du dioxyde de silicium précipité, un gel de silice et/ou du dioxyde de silicium pyrogénique.

3. Elément transparent de protection contre la chaleur selon l'une des revendications 1 et 2, dans lequel la solution de silicate d'alcali présente un silicate de lithium ou un mélange de silicates de lithium, de sodium et/ou de potassium.

4. Elément transparent de protection contre la chaleur selon l'une des revendications 1 à 3, dans lequel l'oxyde de métal alcalin présente un oxyde de lithium ou un mélange d'oxydes de lithium, de sodium et/ou de potassium.

5. Elément transparent de protection contre la chaleur selon l'une des revendications 1 à 4, dans lequel la couche intermédiaire présente un moyen d'abaissement du point de congélation de l'eau contenue.

6. Elément transparent de protection contre la chaleur selon l'une des revendications 1 à 5, dans lequel l'élément de protection contre la chaleur présente entre le premier et le deuxième élément de support un collet de bordure le long des chants, le collet de bordure et les éléments de support formant un espace intermédiaire rempli de la couche intermédiaire.

7. Elément transparent de protection contre la chaleur selon la revendication 6, dans lequel le collet de bordure présente un écarteur et une pâte d'étanchéité.

8. Elément transparent de protection contre la chaleur selon l'une des revendications 1 à 7, dans lequel une couche primaire en un premier matériau dont l'adhérence à la couche intermédiaire et/ou à au moins l'un des éléments de support est moindre dans des conditions de test de protection contre le feu que dans des conditions à température ambiante est disposé entre le premier et le deuxième élément de support.

9. Elément transparent de protection contre la chaleur selon l'une des revendications 1 à 8, dans lequel au moins l'un des éléments de support est configuré comme vitre précontrainte.

10. Elément transparent de protection contre la chaleur selon l'une des revendications 1 à 9, dans lequel l'élément de protection contre la chaleur présente plusieurs couches intermédiaires disposées chaque fois entre deux éléments de support.

11. Elément transparent de protection contre la chaleur selon l'une des revendications 1 à 10, dans lequel l'élément de protection contre la chaleur est un élément de protection contre le feu.

12. Procédé de fabrication d'un élément transparent de protection contre la chaleur selon l'une des revendications 1 à 11, le procédé recourant à un silicate d'alcali aqueux constitué d'un mélange de la solution aqueuse de silicate d'alcali et du composant de dioxyde de silicium placé dans un espace intermédiaire entre le premier et le deuxième élément de support et durci dans l'espace intermédiaire comme couche intermédiaire en gel de silicate d'alcali, le rapport molaire entre le dioxyde de silicium et l'oxyde de métal alcalin étant établi à plus de 4 et le gel de silicate d'alcali présentant de 0,05 à 0,14 pourcent en poids de silicate de lithium.
